# DEMANDE DE BREVET EUROPEEN

(11) **EP 2 677 684 A1**
(43) Date de publication de la demande: **25.12.2013**
(21) Numéro de dépôt: 13172996.4
(22) Date de dépôt: 20.06.2013
(51) Int. Cl.: H04L 9/08, G01R 31/28, G11C 29/52, H04L 9/32

(54) **Procédé pour tester le fonctionnement de pufs**

(30) Priorité: 21.06.2012 FR 1201766
(71) Demandeur: Thales, 92200 Neuilly Sur Seine (FR)
(72) Inventeur: Chau, Rémy, 92230 Gennevilliers (FR); Marcello, Sandra, 92230 Gennevilliers (FR); Quevremont, Jérôme, 92230 Gennevilliers (FR)
(74) Mandataire: Dudouit, Isabelle

(57) **Abrégé**

Procédé pour tester le fonctionnement d'un PUF caractérisé en ce qu'il utilise une signature de référence et des signatures mesurées lorsque le PUF est soumis à un ensemble de stimuli.

## Description

L'objet de l'invention concerne un procédé pour tester le fonctionnement, la fiabilité de circuits connus sous l'abréviation anglo-saxonne PUF pour Physical unclonable function, fonctions qui sont notamment connues dans le domaine de la cryptographie.

Les PUFs sont des fonctions matérielles possédant un mécanisme générant des couples uniques stimuli/réponses propre à chaque composant. Un PUF est une fonction physique qui, pour un stimulus donné, fournit une réponse pratiquement imprédictible, mais caractéristique du support physique. Ces réponses peuvent être légèrement différentes d'une mesure à l'autre et peuvent faire office de modalités pour authentifier des composants sur des circuits électroniques. Cette fonction physique est réalisée, par exemple, sur un circuit électronique qui envoie des challenges et reçoit les réponses, plus généralement elle dépend d'une structure physique. La sortie du PUF correspond à une ou plusieurs de ces réponses. Ces challenges sont basés sur des éléments physiques aléatoires choisis de telle sorte qu'un PUF donnera des réponses similaires sur un même circuit et des réponses différentes sur deux circuits distincts. On utilise, par exemple, le temps de parcours sur des chemins différents, l'initialisation des transistors, des propriétés optiques.

Dans le domaine de la sécurité, la fiabilité des composants est une exigence critique. Chaque composant, notamment cryptographique, doit inclure un dispositif permettant de vérifier son bon fonctionnement tout au long du cycle de vie.

Dans différentes applications utilisant les PUFs, il est important que les réponses du PUF face aux stimuli restent stables. Il n'est pas exclu qu'en cas de dégradation du matériel, la réponse du PUF change de manière significative face à un stimulus donné. De ce fait, si la réponse change, le système à base de PUF n'est plus fonctionnel.

Un des problèmes posé dans l'utilisation actuelle de PUF est de vérifier régulièrement la capacité du PUF à donner des réponses stables.

L'art antérieur connu du Demandeur ne propose pas de méthodes permettant de tester le bon fonctionnement d'un PUF ou sa fiabilité dans les résultats du PUF.

Dans la demande de brevet WO 2001/089143 les PUFs sont utilisés pour extraire une clef cryptographique.

Le document WO 2003/090259 divulgue une méthode d'authentification d'un composant en utilisant les PUFs. Il est mué sur le test du fonctionnement du PUF lui-même.

La demande de brevet WO 2011/118548 présente aussi une utilisation de PUFs pour tester l'intégrité d'un composant, mais pas le test de fiabilité pour le PUF lui-même.

Le procédé selon l'invention repose notamment sur la vérification du bon fonctionnement ou fiabilité d'un PUF avec une fonction de signature. Le procédé s'applique, par exemple, pour des PUFs à base de cellules mémoires. Il peut aussi être utilisé pour des PUFs dont le nombre de couples stimuli/réponse peut être traité dans un temps et une complexité raisonnable.

L'objet de la présente invention concerne un procédé pour tester le fonctionnement d'un circuit de type PUF **caractérisé en ce qu'il** comporte:
- une première étape de génération comportant au moins les étapes suivantes:
   ○ la stimulation d'un PUF afin d'obtenir une ou plusieurs réponses *R*₁ ... *R_{N}* d'un PUF, la ou les N réponses *R*₁ ... *R_{N}* étant ensuite combinées à un ou plusieurs éléments secrets *c*₁.... *c_{N}* afin d'obtenir un ou plusieurs sketchs s(*R*₁), .., s(*R_{N}*)*,*
   ○ la transmission du ou des N éléments secrets *c*₁.... *c_{N}* à au moins une et au plus N fonctions injectives non inversibles afin de générer une signature (*h*₁, (c₁), .., *h_{hN}* (*c_{N}*)) du PUF,
   ○ la mémorisation de la signature (*h*₁,(c₁), .., *h_{hN}* (c*_{N}*)) du PUF et les sketchs s(R₁), ..s(R_{N}),
- une deuxième phase de vérification de la signature du PUF à tester comportant au moins :
   ○ une phase de reconstruction d'un ou plusieurs éléments secrets *c*'₁.... *c*'*_{N}* à partir des sketchs s (*R*₁), .., S (*R_{N}*) obtenus de la première étape et de N réponses *R'*₁...*R'_{N}*.du PUF stimulé,
   ○ une phase de génération de la signature (*h*₁, (*c'*₁), .., *h_{hN}* (*c'_{N}*)) du PUF à partir du ou des éléments secrets *c*'₁.... *c'_{N},*
   ○ une phase de comparaison de la signature mémorisée (*h*₁, (c₁), .., *h_{hN}* (c*_{N}*)) *et* de la signature (h₁, (c'₁), .., *h_{hN}* (*c'_{N}*)), et si les deux signatures sont égales, alors l'émission d'un résultat ou signal de bon fonctionnement, dans le cas contraire pour des signatures non identiques, l'émission d'un signal de défaillance du PUF.

Selon un mode de réalisation, le procédé selon l'invention peut comporter au moins les étapes suivantes :
une phase d'initialisation comprenant au moins les étapes suivantes:
   - générer, E₀₀, en interne au module Secure Sketch un mot du code correcteur d'erreur MCj,
   - déterminer un nombre de stimuli adapté à extraire toutes les réponses du PUF ou de la partie du PUF à tester, soumettre le PUF, E₁₀, aux stimuli et transmettre E₁₁ la réponse Ri du PUF à un stimulus, à un module Secure Sketch,
   - déterminer, E₁₂, un sketch SKETCHj en combinant une réponse Ri et un mot du code MCj et mémoriser, E₁₄, lesdits sketchs obtenus,
   - exécuter les trois étapes précédentes pour l'ensemble des stimuli,
   - transmettre, E₁₃, tous les mots du code à une fonction de hachage et de signature afin de générer E₁₅ une première signature SigMc associée au PUF,
une phase de test du PUF comportant au moins les étapes suivantes :
   - utiliser les mêmes stimuli et dans le même ordre que ceux utilisés à l'étape d'initialisation, déterminer E₂₀ pour chacun des stimuli, une réponse R'i du PUF,
   - à partir des sketchs SKETCHj générés lors de l'étape d'initialisation et des réponses R'i du PUF, déterminer, E₂₁, les valeurs du mot du code MCTESTj,
   - transmettre, E₂₂, chacun des mots du code MCTESTj à une fonction de hachage et générer une signature SigMcTest,
   - comparer, E₂₄, la signature SigMcTest et la signature SigMC et si les deux signatures ne sont pas égales, émettre un signal de défaillance du PUF, si les signatures sont égales, émettre un signal de fonctionnement correct.

Le procédé selon l'invention est, par exemple, utilisé pour tester un PUF à cellules mémoires et le procédé comporte les étapes suivantes :
- on utilise un mot du code MCj d'une longueur de m bits, la réponse Ri du PUF a une longueur de n bits,
- on génère un bit de sketch SKETCHj à partir d'un bit du mot de code MCj et d'un bit de la réponse Ri,
s'il reste un ou plusieurs bits du mot du code MCj non combiné avec un bit de réponse du PUF, alors on génère des bits de bourrage R_BOUR et on combine un bit du mot de code non combiné avec un bit de bourrage.

Le procédé utilise comme fonction de hachage la fonction SHA 256.

Pour générer les stimuli, le procédé selon l'invention utilise, par exemple, un séquenceur.

D'autres caractéristiques et avantages du dispositif selon l'invention apparaîtront mieux à la lecture de la description qui suit d'un exemple de réalisation donné à titre illustratif et nullement limitatif annexé des figures qui représentent :
- La figure 1, un exemple d'initialisation pour la création d'une signature de référence,
- La figure 2, un exemple des étapes mises en oeuvre pour le test de fiabilité d'un PUF,
- Les figures 3 et 4 des variantes de réalisation des figures 1 et 2 dans le cas d'un PUF à base de cellules mémoires.

Un des objectifs de la présente invention est de fournir un procédé permettant de tester la fiabilité de fonctionnement d'un PUF.

Pour tester la fiabilité d'un PUF nous définissons la notion de signature d'un PUF. Cette signature permet de vérifier qu'il n'y a pas eut une altération volontaire ou non du support physique, par exemple le composant.

Pour définir cette signature nous utilisons une notion introduite en 2001 par Dodis et al., dans l'article intitulé :" Fuzzy Extractors : How to generate strong keys from biometrics and other noisy data" publié dans les comptes-rendus de la conférence Eurocrypt 2004, LCNS, vol. 3027, pp 523-540. Les auteurs définissent les « fuzzy extractors » (extracteurs flous). Pour rendre les données stables malgré la présence de bruit, les auteurs de cet article proposent l'utilisation d'un extracteur flou composé de deux primitives. Un premier module, désigné par l'expression anglo-saxonne « secure sketch » permet la conciliation de l'information, c'est-à-dire le rétablissement d'une valeur systématiquement identique en sortie pour une donnée d'entrée bruitée et un second module permet de rendre uniforme la sortie de l'extracteur flou par application d'une fonction d'extraction d'aléa sur ladite sortie préalablement stabilisée. Le module « secure sketch » va fonctionner en deux phases : l'enrôlement et la correction. La phase d'enrôlement peut n'être exécutée qu'une seule fois; elle produit, à partir d'une donnée de référence, notée w, issue d'une mesure d'une donnée confidentielle W fournie en entrée, une donnée publique, notée s et parfois qualifiée de « sketch ». Classiquement, la donnée de référence w peut être obtenue par une première mesure issue d'un traitement d'une donnée confidentielle W reçue par un capteur. Seule la donnée publique s est enregistrée, la donnée de référence w étant confidentielle. Par la suite, la phase de correction est exécutée à chaque fois que l'on souhaite retrouver la donnée issue d'un traitement de la donnée confidentielle W. A cette fin, une donnée bruitée w' provenant d'une mesure issue d'un traitement de la donnée confidentielle W - par exemple une seconde mesure d'une même empreinte digitale - est combinée à la donnée publique s. La donnée publique s joue un rôle de reconstruction de la donnée confidentielle de référence w à partir d'une donnée bruitée w'. Si la donnée bruitée est trop éloignée de la donnée de référence w, cette dernière ne peut être reconstruite. C'est le cas, par exemple, lorsque la donnée bruitée w' est obtenue par une mesure de traitement d'une donnée X différente de la donnée confidentielle. La reconstruction de la donnée de référence w implique l'utilisation d'un code correcteur d'erreur.

Pour construire la signature d'un PUF nous utilisons un Secure Sketch noté SS.

L'utilisation de secure sketches implique l'utilisation de codes correcteurs. Par exemple, pour le secure sketch appelé code offset, dans la phase d'enrôlement, un code correcteur est sélectionné, puis un mot c de ce code est choisi aléatoirement. Ce mot de code est ensuite combiné avec la donnée de référence w pour obtenir la donnée publique de sketch s. Dans la phase de correction, cette donnée s est combinée à la mesure w' pour obtenir un mot c', qui n'appartient pas forcément au code, que l'on peut corriger à condition de w' soit assez proche de w. Pour retrouver la donnée de référence w, c est combiné avec s. La signature d'un PUF peut être également définit avec un Secure Sketch généralisé (noté SSg tel que décrit dans le brevet du demandeur FR 0903699) ou un Secure Sketch généralisé recentré (noté SSgr décrit dans le brevet du demandeur FR 1005115).

Le procédé selon l'invention repose notamment sur la vérification du bon fonctionnement ou fiabilité d'un PUF avec une fonction de signature. Le procédé s'applique, par exemple, pour des PUFs à base de cellules mémoires. Il peut aussi être utilisé pour des PUFs dont le nombre de couples stimuli/réponse (Challenge-Response Pairs) peut être traité dans un temps et une complexité raisonnables.

Un PUF est une fonction dont les sorties (ou réponses) sont de taille fixes (tpuf) telle que décrit dans le document intitulé « Security with noisy data, On private biometrics, Secure Key storage and anti-counterfeiting » P Tuyls, B. Skoric, T. Kevenaar Springer 2007.

Dans la suite de la description, N est défini comme un entier non nul qui représente le nombre de couples stimuli/réponse considéré pour étudier la fiabilité du PUF. Pour certains types de PUFs, par exemple des PUF à base de cellules mémoire, il pourra s'agir de tous les couples possibles.

Selon un premier mode de réalisation, le procédé de test selon l'invention va considérer au moins 1 et au plus N Secure Sketch (SSi) pour i allant de 1 à N.

Le procédé de l'invention peut également être défini à partir de Secure Sketch généralisé (noté SSg) ou de Secure Sketch généralisé (noté SSgr) recentré tels que définis dans la demande de brevet du Demandeur PCT/EP2011/073873.

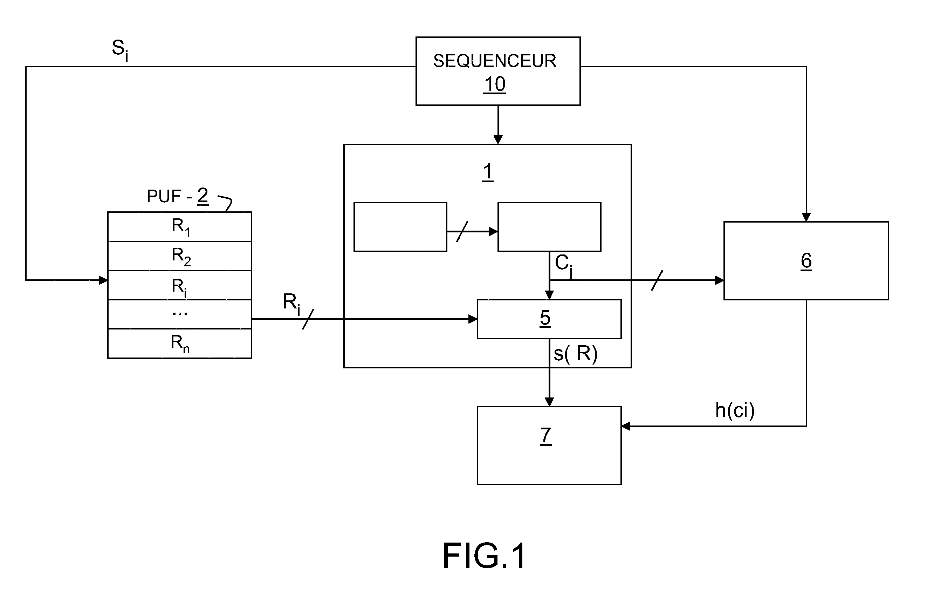

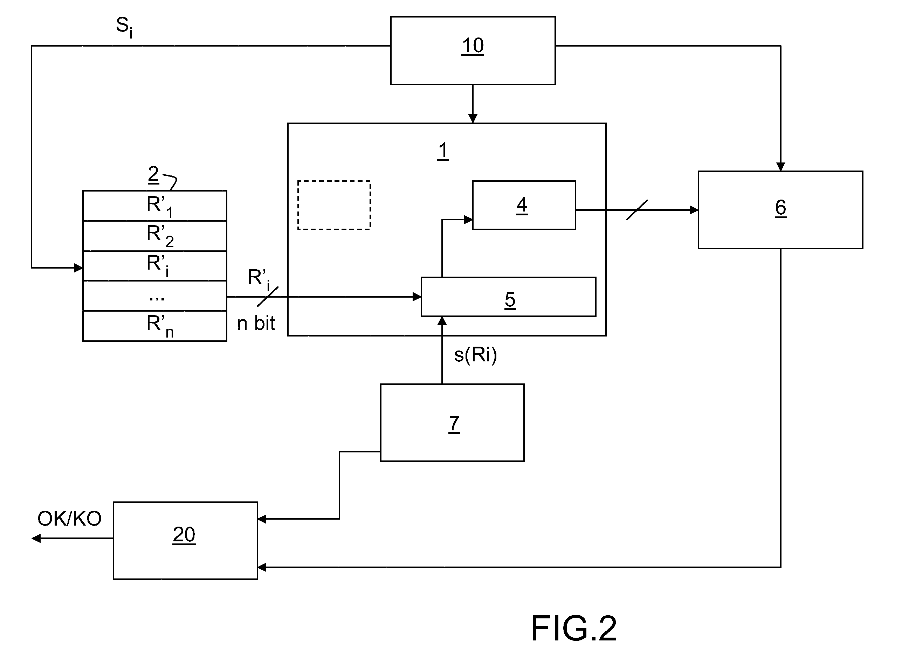

Le procédé selon l'invention se déroule en deux phases : une phase de génération de la signature (figure 1) et une phase de vérification de la signature (figure 2). La phase de génération de l'empreinte ou signature comporte le déroulement de phases d'initialisation des secures sketches SS (SSg ou SSgr). La phase de vérification de la signature comporte des phases de correction des SS (SSg ou SSgr).

La figure 1 schématise un exemple d'architecture d'un système permettant la génération d'une signature d'un PUF. Un séquenceur 10 qui va orchestrer les différences étapes. Un secure sketch 1 génère en interne N éléments secrets c₁..., c_{N}. Le PUF 2 à tester reçoit du séquenceur des couples stimuli/réponse. Un module combinatoire 5 est adapté à combiner les éléments secrets et les réponses des PUFs selon un schéma décrit ci-après. Une mémoire 7 stocke notamment les sketchs résultant du module combinatoire. Un module 6 de fonction injective non inversible transforme les éléments secrets en signature du PUF.

Le procédé considère N couples Stimuli/ réponses pour le PUF à tester, les réponses sont notées *R*₁, ..., *R_{N}* .

Les notations suivantes sont utilisées Enrol(SS)(R) (respectivement Enrol(SSg)(R), Enrol(SSgr)(R)) correspond à la phase d'enrôlement du SS (resp. SSg, SSgr) pour la donnée R. Le résultat de cette phase d'enrôlement pour la donnée R est le sketch associé à R noté s(R), le sketch est une donnée publique.
- Reconst(SS)(R',s(R)) (resp. Reconst(SSg)(R',s(R)),Reconst(SSgr) (R', s(R))) la phase de reconstruction du SS (resp. SSg, SSgr) pour la donnée R avec le sketch s(R). Le résultat de cette phase de reconstruction pour la donnée R' est la donnée R utilisée lors du premier enrôlement.

La première étape du procédé est la génération de la signature d'un PUF à tester :
- N enrôlements sont réalisés Enrol(S*S*₁)(R₁)... Enrol(S*S_{N}*)(R*_{N}*). Les sketchs associés s(R₁), .., s(R_{N}) sont obtenus et transmis,
- N éléments secrets notés *c*₁.... *c_{N}* utilisés lors des processus d'enrôlement sont traités par une fonction injective non inversible 6, les résultats ou signature du PUF obtenus de la fonction injective étant mémorisés dans une mémoire 7. La fonction injective peut être constituée d'une ou plusieurs fonctions de hachage de qualité cryptographique ou d'une ou plusieurs fonctions de type HMAC connue de l'Homme du métier.

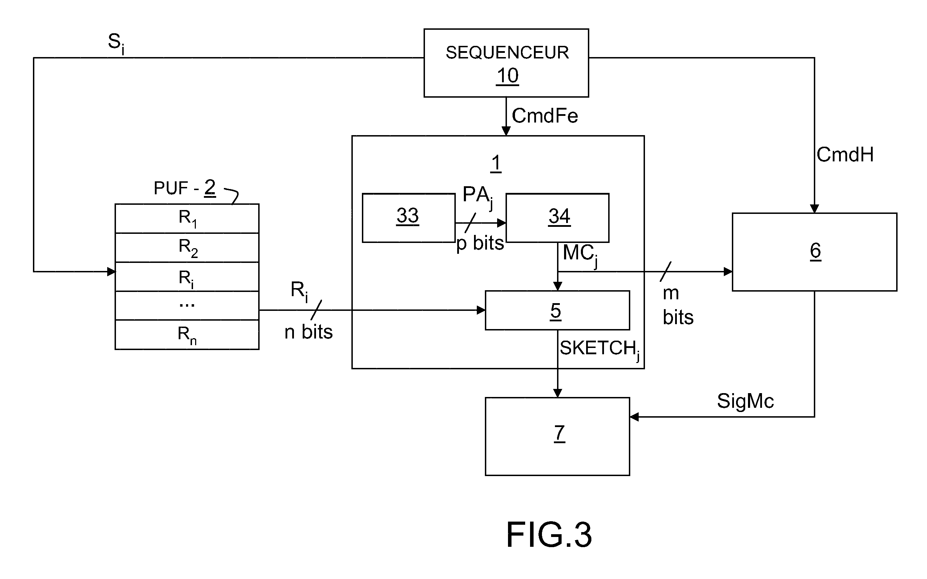

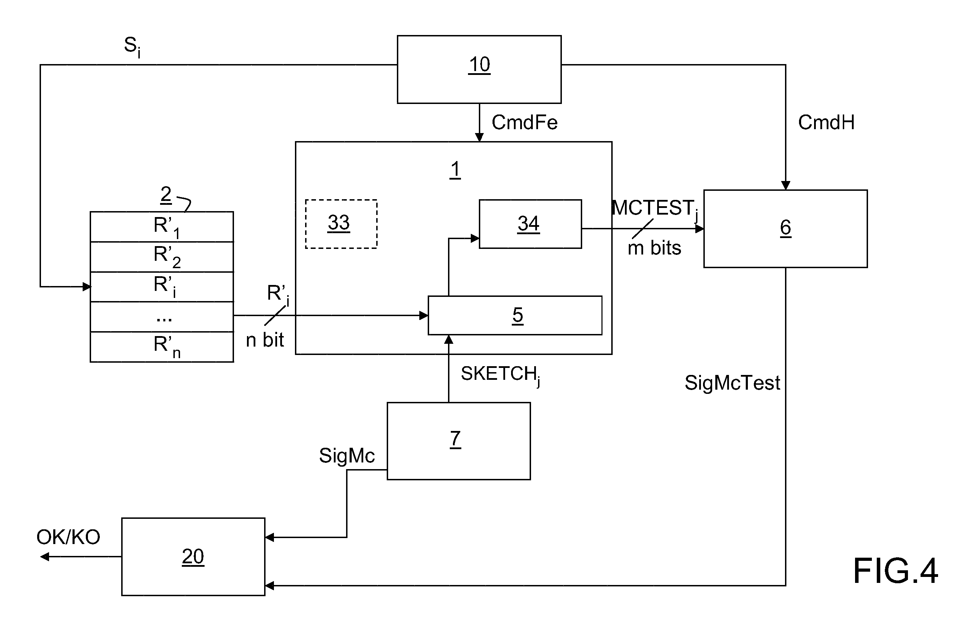

Par exemple pour le code Offset, il s'agit d'un mot du code tiré aléatoirement lors de la phase d'enrôlement comme il sera décrit aux figures 3 et 4.

La signature du PUF est la donnée (*h*₁, (c₁), .., *h_{hN}* (c*_{N}*)), elle est mémorisée dans la mémoire 7. La signature du PUF correspond à une empreinte des éléments secrets générés en interne d'un Secure Sketch.

La deuxième étape du procédé est la vérification de la signature décrite en relation avec la figure 2.

Les données s(R₁),..., s(R*_{N}*) obtenues lors de la première étape et mémorisées dans la mémoire 7 sont publiques.

Le PUF à tester est soumis à N couples de stimuli comme dans la première étape afin de déterminer N réponses *R'*₁... *R'_{N} .*

N phases de corrections sont réalisées avec les SS (resp. SSg, SSgr). A partir des données *R'*₁*...R'_{N}* et des sketchs publics s(R₁)...s(R*_{N}*) obtenus lors de la première étape et mémorisés dans la mémoire 7, on détermine Reconst(*SS*₁)(*R*'₁,s(R₁)),....,Reconst(( S*S_{N}*)(*R'_{N}* ,s(*R_{N}*)).

Lors de chacune de ces phases de corrections un élément secret c'₁.... *c'_{N}* est reconstitué. Ces éléments secrets sont traités par une fonction injective non inversible 6 (la même que dans la phase de génération de l'empreinte) afin de générer la signature du PUF. L'étape suivante consiste au moyen d'un comparateur 20 de signature d'évaluer la concordance entre les éléments (*h*₁, (c₁), ..*h_{hN}* (c*_{N}*)) de la signature du PUF obtenue lors de la première étape et la signature (*h*₁, (*c*'₁),.., *h_{hN}* ( *c'_{N}*)) obtenue lors de la deuxième étape, Si tous les éléments calculés lors de la génération de l'empreinte sont retrouvés alors le fonctionnement du PUF est déclaré valide. Ceci se traduit par un résultat pouvant être transmis par un signal OK généré par le comparateur 20, selon des méthodes connues de l'Homme du métier.

L'exemple explicité dans le cas d'un Secure Sketch peut aussi être utilisé dans le cas d'un Secure Sketch généralisé SSg ou un Secure Sketch généralisé recentré (SSgr) introduit précédemment.

Le procédé de reconstruction ne nécessite pas nécessairement d'être achevé, ainsi dans le cas où le Secure Sketch utilisé est un code-offset comme décrit ci-après l'étape de reconstruction peut être stoppée lorsque le mot de code est reconstitué. Un gain en temps de calcul peut donc être réalisé.

L'exemple représenté aux figures 3 et 4 est donné dans le cas d'un PUF à base de cellules mémoires.
Pour cet exemple, les définitions suivantes sont utilisées.
PAj : mot binaire pseudo-aléatoire généré par un générateur de nombre pseudo-aléatoire ou PRNG pour Pseudo Random Number Generator,
MCj : Mot du code généré par le bloc code correcteur d'erreur ECC (Error Correcting Code) à partir de PAj,
McTest : Mot du code régénéré en phase de test à partir des sketchs SKETCHj issus de la phase d'initialisation et de la réponse Rj' du PUF,
Ri : réponse du PUF lors de la phase d'initialisation,
R'i : réponse du PUF lors de la phase de test,
SKETCHj sketch. Chaque bit de sketch est généré par exemple par un bit de réponse Ri du PUF et un bit de mot du code MCj,
SigMc signature de tous les mots du code MCj générés en phase d'initialisation,
R_BOUR Bit de bourrage,
SigMcTest Signature de tous les mots du code MCj régénéré par le Secure Sketch à partir des sketchs SKETCHj et de la réponse R'i du PUF,
n est la longueur en nombre de bit de chaque réponse Ri du PUF généré à partir d'un stimuli. Cette longueur est définie par le choix du PUF,
p est la longueur en nombre de bit de chaque mot PAj en entrée du bloc ECC. Cette longueur est définie par le choix du bloc code correcteur d'erreur ECC,
m est la longueur en nombre de bit de chaque mot du code MCj du bloc ECC. Cette longueur est définie par le choix du bloc code correcteur d'erreur ECC,
ntot est le nombre de bits total de réponses du PUF à base de cellules mémoires,
Nd est la longueur en nombre de bit de chaque réponse R'i et de chaque Sketch SKETCHj nécessaire à régénérer un mot du code McTest en phase de test.

La figure 3 schématise un exemple d'étapes mises en oeuvre par le procédé selon l'invention pour l'initialisation permettant de générer une signature de référence. Le procédé est piloté par exemple par un séquenceur 10 qui va orchestrer les différentes étapes.

Un Secure Sketch 1 génère E₀₀ en interne un mot binaire pseudo aléatoire PAⱼ d'une longueur de p bits, puis code E₀₁ le mot binaire PAⱼ afin d'obtenir un mot du code MCⱼ d'une longueur de m bits. Le Secure Sketch comporte notamment un bloc code correcteur d'erreur, 34, ECC, un module générateur de nombre pseudo-aléatoire 33 PRNG adapté à générer de manière pseudo-aléatoire des mots binaires pseudo-aléatoire qui sont transformés en mot du code par le bloc ECC, un module combinatoire 5 des différents éléments.

Le séquenceur 10 génère, E₁₀, un stimulus Si afin d'obtenir une réponse Ri du PUF 2 dont on souhaite tester le fonctionnement. La réponse Ri du PUF, d'une longueur de n bits par exemple, est transmise, E₁₁, au Secure Sketch 1. A partir de la réponse Ri du PUF et du mot du code MCj, le Secure Sketch 1 génère, E₁₂, un sketch SKETCHj. Dans cet exemple, chaque bit du sketch SKETCHj est obtenu à partir d'un bit du mot de code MCj et d'un bit de la réponse Ri. Les bits de sketch SKETCHj sont mémorisés, E₁₄, par exemple dans une mémoire non volatile 7.

Une fois que tous les bits de la réponse Ri ont été utilisés, le séquenceur 10 envoie un nouveau stimulus Sᵢ₊₁ vers le PUF afin d'obtenir une nouvelle réponse Rᵢ₊₁ du PUF et transmettre cette réponse au Secure Sketch.

Lorsque tous les bits du mot de code MCj ont été utilisés pour générer un sketch, alors le mot de code est transmis, E₁₃, à une fonction 6 de hachage et de signature.

Le Secure Sketch 1 génère ensuite, E₀₀, un nouveau mot du code MCⱼ₊₁ afin de pouvoir continuer le traitement des réponses fournies par le PUF suite au nouveau stimulus.

Le nombre de stimuli utilisé est fonction du PUF 2 à tester ou de la partie du PUF à tester. Ce nombre est choisi afin que l'on puisse obtenir de manière exhaustive toutes les réponses du PUF. L'utilisateur peut ainsi déterminer une zone du PUF à tester. Par exemple, il sera possible de ne tester que la moitié d'un PUF et ainsi sortir uniquement les réponses du PUF correspondantes à la zone à tester.

Le procédé dispose à la fin des étapes d'itérations, de L réponses R_{L} du PUF et de L sketchs.

Une fois que les R_{L} réponses du PUF ont été extraites et traitées le procédé va tester :
1) s'il ne reste aucun bit du mot du code MCj courant non combiné avec un bit d'une réponse du PUF, alors le procédé va continuer à exécuter l'étape suivante du procédé, la fonction de hachage,
2) s'il reste un ou plusieurs bits du mot du code MCj courant non combiné avec un bit d'une réponse du PUF, alors le procédé va générer, E₁₄, des bits de bourrage constants R_BOUR, les combiner avec les bits du mot du code non combinés et transmettre le mot du code MCj à l'étape suivante.

Le séquenceur 10, demande à la fonction de hachage de générer, E₁₅, la signature finale SigMc calculée à partir de tous les mots du code MC1,..., MCL, générés précédemment. La signature SigMc est stockée, E₁₆, dans la mémoire volatile.

La fonction de hachage utilisée est, par exemple, la fonction connue sous l'abréviation SHA 256. Un exemple d'algorithmes permettant le calcul de signature sont les fonctions de hachage tel SHA-1, SHA-2 ou encore MD5. Il peut être également envisageable d'utiliser un algorithme de type CRC.

En fonctionnement normal du procédé selon l'invention, la phase d'initialisation est exécutée une seule fois.

En sortie de la phase d'initialisation le procédé dispose donc :
- de L sketchs SKETCHⱼ mémorisés générés à partir de la réponse brute du PUF et du mot du code généré en interne du Secure Sketch,
- d'une signature SigMc générée à partir de tous les mots du code générés en interne du Secure Sketch,

Les sketchs et la signature de référence seront utilisés lors de la phase de contrôle du bon fonctionnement du PUF. Ils vont notamment permettre au Secure Sketch de retrouver la réponse du PUF même si elle a été altérée et qu'elle comporte des erreurs, comme il sera décrit ci-après.

La deuxième phase du procédé schématisée à la figure 4 a notamment pour objectif de tester le fonctionnement d'un PUF, sa fiabilité dans les valeurs qu'ils génèrent. Pour cela, le procédé selon l'invention va utiliser le même générateur de stimuli pour transmettre dans le même ordre le même nombre de stimuli au PUF testé qui est le PUF utilisé dans la phase d'initialisation.

Le procédé grâce au séquenceur va générer E₀₀ comme dans la phase d'initialisation, plusieurs stimuli Si afin d'obtenir, E₂₀, les réponses R'i du PUF, une réponse, dans cet exemple a une longueur de n bits. Les stimuli sont utilisés dans un ordre identique à celui de la première phase du procédé.

Les réponses Ri' du PUF ainsi obtenues et les sketchs SKETCHj calculés et mémorisés en phase d'initialisation sont envoyés, E₂₁, au Secure Sketch 1 afin de régénérer les mots du code MCTESTj. La séquence de la régénération des mots du code MCTESTj à partir des sketchs SKETCHj calculés lors de la phase d'initialisation et des réponses R'i dépendent notamment du Secure Sketch utilisé.

Le procédé transmet, E₂₂, chaque mot du code MCTESTj régénéré à la fonction de hachage 6.

Si tous les bits de sketch générés préalablement à la phase d'initialisation ont été utilisés pour générer les MCTESTⱼ, le séquenceur 10 demande, E₂₃, à la fonction de hachage 6 de sortir la signature finale SigMcTest calculée à partir de tous les mots du code MCTESTⱼ regénérés.

Dans le cas où des bits de bourrage ont été générés lors de la phase d'initialisation, alors le procédé utilise les mêmes bits de bourrage pour déterminer les mots du code correcteur d'erreur MCTESTⱼ.

Pour déterminer la présence ou non d'erreurs dans le PUF, le procédé va comparer, E₂₄, grâce à un module de comparaison 20 la valeur de la signature de référence SigMc stockée dans la mémoire 7 et la valeur de la signature SigMcTest trouvée. Si les signatures diffèrent c'est la preuve que les mots de code McTest et Mc ne sont pas identiques et donc qu'il y a une dégradation du PUF.

Le PUF est déclaré intègre et fiable si les deux signatures SigMcTest et SigMc sont strictement équivalentes, ou identiques.

Dans le cas où la signature SigMcTest du PUF et la signature de référence SigMc sont différentes, alors le procédé va décréter que le PUF est défaillant. Le procédé génère un signal de présence d'erreurs ou de fonctionnement correct du PUF.

Chaque réponse Rᵢ du PUF participe ainsi à la régénération des MCTEST. Si le PUF est détérioré, la signature finale SigMcTest sera différente de SigMc. Le procédé repère donc une détérioration du PUF.

Les étapes décrites ci-dessus peuvent aussi, sans sortir du cadre de l'invention, être utilisées dans le cas de test de PUF autre qu'un PUF à base de cellules mémoires.

Le procédé selon l'invention offre un procédé simple à mettre en oeuvre qui permet de vérifier, sur demande, le fonctionnement correct d'un PUF et de pouvoir détecter toute violation externe d'un PUF. Un autre avantage du procédé selon l'invention est de permettre, avec peu de surcoût en termes de cellules logiques, le test de fiabilité d'un PUF sans compromettre les couples stimuli/réponses du PUF qui sont des éléments sensibles d'un point de vue cryptographique.

Dans le cas de l'utilisation d'un PUF pour générer une clé cryptographiques, ceci permet d'assurer la stabilité dans la clé cryptographique obtenue.

Dans le cas d'une autre utilisation d'un PUF, le procédé en contrôlant le bon fonctionnement de ce dernier assure la sécurité des résultats dans l'utilisation.

La signature SigMC est issue d'une fonction de hachage strictement injective. Les données Rᵢ sensibles, puisque participant en général à la génération de clefs cryptographiques, ne sont pas compromises lors du test.

## Revendications

1. Procédé pour tester le fonctionnement d'un circuit de type PUF **caractérisé en ce qu'il** comporte:
• une première étape de génération comportant au moins les étapes suivantes:
○ la stimulation d'un PUF afin d'obtenir une ou plusieurs réponses *R*₁ ... *R_{N}* d'un PUF, la ou les N réponses R₁ ... *R_{N}* étant ensuite combinées à un ou plusieurs éléments secrets *c*₁.... *c_{N}* afin d'obtenir un ou plusieurs sketchs s (*R*₁), .., s (*R_{N}*),
○ la transmission du ou des N éléments secrets *c*₁.... *c_{N}* à au moins une et au plus N fonctions injectives non inversibles afin de générer une signature (*h*₁, (c₁), .... *h_{hN}* (c*_{N}*)) du PUF,
○ la mémorisation de la signature (*h*₁, (c₁), .., *h_{hN}* (c*_{N}*)) du PUF et les sketchs s (*R*₁), .., s (*R_{N}*),
• une deuxième phase de vérification de la signature du PUF à tester comportant au moins :
○ une phase de reconstruction d'un ou plusieurs éléments secrets *c*'₁.... *c*'*_{N}* à partir des sketchs s (*R*₁), ..,s (R*_{N}*) obtenus de la première étape et de N réponses *R'*₁*... R'_{N}* .du PUF stimulé,
○ une phase de génération de la signature (*h*₁, (*c'*₁)*,* .., *h_{hN}* ( *c'_{N}*)) du PUF à partir du ou des éléments secrets *c*'₁.... *c'_{N}* ,
○ une phase de comparaison de la signature mémorisée (*h*₁, (c₁), .., *h_{hN}* (c*_{N}*)) et de la signature (*h*₁, (*c*'₁), .., *h_{hN}* (*c'_{N}*))*,* et si les deux signatures sont égales, l'émission d'un signal de bon fonctionnement, si les deux signatures ne sont pas égales, l'émission d'un signal de défaillance du PUF.

2. Procédé pour tester le fonctionnement d'un circuit de type PUF **caractérisé en ce qu'il** comporte:
• une phase d'initialisation comprenant au moins les étapes suivantes:
• générer, E₀₀, en interne au module Secure Sketch un mot du code correcteur d'erreur MCj,
• déterminer un nombre de stimuli adapté à extraire toutes les réponses du PUF ou de la partie du PUF à tester, soumettre le PUF (2), E₁₀, aux stimuli et transmettre E₁₁ la réponse Ri du PUF à un stimulus à un module Secure Sketch,
• déterminer, E₁₂, un sketch SKETCHj en combinant une réponse Ri et un mot du code MCj et mémoriser, E₁₄, lesdits sketchs obtenus,
• exécuter les trois étapes précédentes pour l'ensemble des stimuli,
• transmettre E₁₃ tous les mots du code à une fonction de hachage afin de générer E₁₅ une première signature SigMc associée au PUF,
• une phase de test du PUF comportant au moins les étapes suivantes :
• utiliser les mêmes stimuli et, dans le même ordre que ceux utilisés à l'étape d'initialisation, déterminer E₂₀ pour chacun des stimuli, une réponse R'i du PUF,
• à partir des sketchs SKETCHj générés lors de la phase d'initialisation et des réponses R'i du PUF, déterminer, E₂₁, les valeurs du mot du code MCTESTj,
• transmettre, E₂₂, chacun des mots du code MCTESTj à une fonction de hachage et générer une signature SigMcTest,
• comparer, E₂₄, la signature SigMcTest et la signature SigMC si les deux signatures ne sont pas égales, émettre un signal de défaillance du PUF, si elles sont égales, émettre un signal de fonctionnement correct.

3. Procédé selon la revendication 1 **caractérisé en ce que** le PUF testé est un PUF à cellules mémoires et **en ce que** :
• on utilise un mot du code MCj d'une longueur de m bits, la réponse Ri du PUF a une longueur de n bits,
• on génère un bit de sketch SKETCHj à partir d'un bit du mot de code MCj et d'un bit de la réponse Ri,
• s'il reste un ou plusieurs bits du mot du code MCj non combiné avec un bit de réponse du PUF, alors on génère des bits de bourrage R_BOUR et on combine un bit du mot de code non combiné avec un bit de bourrage.

4. Procédé selon l'une des revendications 2 à 3 **caractérisé en ce que** la fonction de hachage est la fonction SHA 256.

5. Procédé selon la revendication 2 **caractérisé en ce que** l'on utilise un séquenceur (10) pour générer les stimuli.
